# FASCICULE DE BREVET EUROPEEN

(11) **EP 4 437 296 B1**
(45) Date de publication et mention de la délivrance du brevet: **20.05.2026**
(21) Numéro de dépôt: 22818371.1
(22) Date de dépôt: 17.11.2022
(51) Int. Cl.: F28D 1/03, F28D 21/00, H01M 10/60, F28F 3/12, F28F 3/06, F28F 3/04, F28F 3/02, F28F 13/08, H01M 10/6554, H01M 10/6556, H01M 10/625

(54) **ECHANGEUR DE CHALEUR D'UN ÉLÉMENT ÉLECTRIQUE ET/OU ÉLECTRONIQUE POUR VÉHICULE AUTOMOBILE**
WÄRMETAUSCHER FÜR EIN ELEKTRISCHES UND/ODER ELEKTRONISCHES BAUTEIL EINES KRAFTFAHRZEUGS
HEAT EXCHANGER FOR AN ELECTRICAL AND/OR ELECTRONIC ELEMENT OF A VEHICLE

(30) Priorité: 26.11.2021 FR 2112562
(43) Date de publication de la demande: 02.10.2024
(73) Titulaire: Valeo Electrification, 95892 Cergy Pontoise (FR)
(72) Inventeur: MULLER, Jean Damien, 78322 Le Mesnil-Saint-Denis Cedex (FR); IBRAHIMI, Mohammed, 78322 Le Mesnil-Saint-Denis Cedex (FR)
(74) Mandataire: Valeo Powertrain Systems
(86) Numéro de dépôt international: PCT/EP2022/082304
(87) Numéro de publication internationale: WO 2023/094263

(56) Documents cités:
- US-A- 5 137 082
- US-A1- 2010 044 019
- US-A1- 2019 219 313

## Description

Le domaine de la présente invention concerne la régulation thermique d'un élément électrique et/ou électronique, et plus particulièrement, la présente invention se rapporte à un échangeur pour la régulation thermique d'un élément électrique et/ou électronique destiné aux véhicules automobiles électriques ou hybrides.

Les éléments électrique et/ou électronique peuvent être par exemple, des batteries, des dispositifs d'électronique de puissance ou encore des serveurs informatiques.

Les véhicules électriques et hybrides sont couramment équipés d'une batterie. Un tel élément électrique et/ou électronique est constitué d'un assemblage de modules électriques, eux-mêmes constitués d'un assemblage de cellules électrochimiques.

Pour assurer l'autonomie, la performance et la fiabilité d'un tel élément électrique et/ou électronique, il convient, en moyenne, de réguler thermiquement l'élément électrique et/ou électronique. Une gestion thermique de l'élément électrique et/ou électronique vise à maintenir la température des modules électriques qui le compose, à une température comprise approximativement entre 20°C et 40°C. En effet, lorsque la température d'un module électrique est trop basse, la capacité de ses cellules électrochimiques diminue et lorsque la température d'un module électrique est trop élevée la durée de vie de ses cellules électrochimiques est dégradée. Pour assurer cette gestion thermique, il est connu d'utiliser un dispositif de gestion thermique comprenant au moins un échangeur de chaleur directement au contact d'un module électrique de l'élément électrique et/ou électronique et parcourue par un fluide caloporteur. Afin que le fluide caloporteur circule, le ou les échangeurs de chaleur sont traversés par un circuit d'échange thermique formé par exemple par des conduits ménagés dans le ou les échangeurs de chaleur eux-mêmes.

Les éléments électriques et/ou électroniques, que ce soit des cellules de stockage d'énergie électrique, des circuits intégrés, serveurs, centres de données, etc nécessitent une régulation thermique afin de les maintenir dans leur plage de température de fonctionnement.

L'invention est en particulier destinée à équiper des véhicules automobiles, en particulier des véhicules automobiles à motorisation électrique ou hybride et à réguler thermiquement une cellule de stockage d'énergie électrique ou des éléments d'électronique de puissance.

La part de marché des véhicules électriques étant de plus en plus importante, les problématiques diélectrique/chauffage des packs batterie qui les équipent deviennent des enjeux stratégiques. L'objectif est de concevoir un dispositif de gestion thermique des batteries le plus performant, efficace et économique possible. Un échangeur de chaleur selon le préambule de la revendication 1 est connu du document US 2010/044019 A1.

Un problème typique de ces échangeurs de chaleur est la dissipation inhomogène de la chaleur le long de l'échangeur de chaleur. En effet, le fluide caloporteur traversant l'échangeur de chaleur se réchauffe tout le long du canal du fait de l'absorption de calorie provenant de l'élément électrique et/ou électronique à refroidir. Il en va de même dans le cas où le fluide est utilisé de façon à réchauffer l'élément électrique et/ou électronique, le fluide se refroidissant au contact de l'élément à réchauffer. Ainsi, la capacité d'échange thermique entre l'entrée et la sortie d'un échangeur de chaleur est différente et le refroidissement ou le chauffage de l'élément électrique et/ou électronique est dégradé.

En règle général, dans le domaine des batteries électriques par exemple, il ne faut pas observer un écart de température supérieure 10 degrés celsius entre la première et la dernière cellule d'un module de batterie électrique afin d'optimiser leur fonctionnement, il faut donc pouvoir assurer un faible écart de température entre la partie de l'élément ou l'élément à proximité de l'entrée de fluide caloporteur et la partie de l'élément ou l'élément à proximité de la sortie de fluide caloporteur.

Un des buts de la présente invention est de remédier au moins partiellement aux inconvénients de l'art antérieur et de proposer un échangeur de chaleur permettant de limiter l'impact de l'écart de température du fluide caloporteur observer entre l'entrée et la sortie de l'échangeur de chaleur sur la gestion thermique d'un élément électrique et/ou électronique.

L'invention s'applique notamment sur une circulation au sein d'un échangeur de type « en I » ou sur une pluralité de boucles connectées en parallèle au sein du même échangeur.

La présente invention concerne donc un Echangeur de chaleur pour la gestion thermique d'un élément électrique et/ou électronique avantageusement d'un véhicule, comprenant un corps d'échange thermique présentant :
- une surface d'échange thermique destiné à être en contact thermique avec l'élément électrique et/ou électronique
- une surface de base opposée à la surface d'échange thermique,
- un canal d'écoulement d'un fluide caloporteur formé entre la surface d'échange thermique et la surface de base,
le canal d'écoulement comprenant :
- une première zone présentant un premier moyen de perturbation de flux de fluide caloporteur,
- une deuxième zone présentant et un deuxième moyen de perturbation de flux de fluide caloporteur,
le premier moyen de perturbation de flux consistant en une pluralité de déformation locale de la surface de base et le deuxième moyen de perturbation de flux consistant en une ailette agencée entre la surface d'échange thermique et la surface de base et formant une pluralité de chemin d'écoulement.

L'invention permet de fournir un échangeur de chaleur comprenant des zones présentant un coefficient d'échange thermique différentes. Ainsi l'échangeur de chaleur permet un traitement thermique plus homogène du ou des éléments électrique et/ou électronique en atténuant l'impact de la température du fluide caloporteur. En effet, en permettant une augmentation de la perturbation du flux et de la surface d'échange avec le fluide, l'ailette de la deuxième zone du canal d'écoulement permet d'augmenter de façon significative le coefficient d'échange thermique de la deuxième zone par rapport au coefficient d'échange thermique de la première zone du canal d'écoulement.

Avantageusement la paroi d'échange thermique est plane de sorte à fournir une surface d'échange thermique permettant un bon contact thermique avec l'élément électrique et/ou électronique à réguler thermiquement.

La paroi d'échange thermique est destinée à être en contact thermique, ou au regard, d'un élément à réguler thermiquement.

Le fluide caloporteur destiné à circuler dans l'échangeur de chaleur peut être un fluide réfrigérant (1234YF, 134a ou R744 par exemple) ou un liquide de refroidissement (par exemple de l'eau glycolée).

On entend par diamètre hydraulique moyen, la moyenne du diamètre hydraulique sur la totalité de la longueur du canal d'écoulement d'une zone.

L'invention peut également comprendre l'une quelconques des caractéristiques additionnelles listées ci-dessous, prise seule ou en combinaison les unes avec les autres tant que techniquement compatibles entre elles :
- Le deuxième moyen de perturbation de flux est apte à générer une turbulence de l'écoulement du fluide caloporteur supérieure à la turbulence générée par le premier moyen de perturbation de flux, de cette façon la deuxième zone présente un coefficient d'échange thermique supérieur à la première zone ;
- la première zone présente un premier diamètre hydraulique moyen et la deuxième zone présente un deuxième diamètre hydraulique moyen ;
- la première zone et la deuxième zone présente un diamètre hydraulique moyen identique ;
- Le deuxième diamètre hydraulique moyen est supérieur au premier diamètre hydraulique moyen, On entend par diamètre hydraulique moyen, la moyenne du diamètre hydraulique sur la totalité de la longueur du canal d'écoulement d'une zone ;

Ainsi, en combinant l'augmentation du diamètre hydraulique et l'augmentation de la perturbation de flux généré par les moyens de perturbation du flux, il est possible d'augmenter le coefficient d'échange thermique de la deuxième zone par rapport à la première zone et ainsi limiter l'impact de l'augmentation de la température du fluide caloporteur sur la température de l'élément électrique et/ou électrique à réguler thermiquement.
- la paroi de base comprend, au niveau de la première zone du canal d'écoulement, des déformations locales, ou protubérances, et des parties non déformées, le ratio déformations / parties non déformées au cm² de la première zone est constant sur l'ensemble de la première zone,
- la paroi de base comprend, au niveau de la première zone du canal d'écoulement, des déformations locales, ou protubérances, et des parties non déformées, le ratio déformations / parties non déformées au cm² de la première zone est évolutif, avantageusement il est croissant tout au long de la première zone ;
- chaque déformation présente une hauteur H s'étendant entre les parties non déformées de la paroi de base et un sommet, avantageusement le sommet étant éloigné d'une distance d non nulle de la paroi d'échange thermique ; en d'autres termes, la hauteur H de la déformation est strictement inférieure à la hauteur du canal.
- la distance d étant identique pour l'ensemble des déformations d'une même zone, dans le cas où la hauteur Hc du canal augmente, la hauteur H de la protubérance augmente de façon identique de sorte à conserver une même distance d entre le sommet des protubérances et la paroi d'échange thermique ;
- la hauteur H des déformations étant identique pour l'ensemble des déformations d'une même zone ;
- l'ailette peut être de type « à pas décalé », à persienne, droite, ou ondulée ;
- les première et deuxième zones sont directement contiguës, ou séparée par une zone de transition ;
- avantageusement lorsque le moyen de perturbation de flux est une ailette, le diamètre hydraulique est constant sur l'ensemble d'une même zone ;
- le canal d'écoulement s'étend entre une entrée et une sortie de fluide ;
- le corps d'échange thermique présente une pluralité de canaux d'écoulement, chaque canal comprenant leur propre entrée et leur propre sortie ou au moins une pluralité de canaux partagent une entrée commune et une sortie, par exemple en communication avec une chambre d'alimentation alimentant les canaux et une chambre d'évacuation, évacuant le fluide vers la sortie ;
- la paroi d'échange thermique est une première plaque et la paroi de base est une deuxième plaque, le canal étant formé par au moins une déformation de la deuxième plaque, ménageant ainsi un espace entre la paroi d'échange thermique et la paroi de base, l'espace formant le canal d'écoulement ; les déformations de la première zone consistant en des déformations locales de la partie de la paroi de base formant le canal. En d'autres termes les déformations de la première zone consistent en des déformations d'un motif général de la paroi de base au niveau de la première zone du canal.
- l'ailette est assemblée entre la première et la deuxième plaque ;
- l'échangeur de chaleur est réalisé en métal, avantageusement en aluminium, et assemblé par exemple par soudure laser ou brasage ;
- l'augmentation du diamètre hydraulique le long du canal est réalisé de façon continue ;
- afin d'augmenter le diamètre hydraulique, la hauteur et/ou la largeur du canal est augmentée ;
- le diamètre hydraulique des première et deuxième zones est différent, avantageusement le diamètre hydraulique est constant le long de chaque zone, et les première et deuxième zones sont séparées entre elles par une zone de transition ;
- la première zone s'étend entre 50 et 80% de la longueur totale du canal, avantageusement autour de 70%.
- la première zone du canal d'écoulement comprend une entrée de fluide, une chambre d'alimentation et une pluralité de conduites, la chambre d'alimentation alimentant la pluralité de conduites, selon un premier mode de réalisation, chaque conduite débouche directement dans la deuxième zone, selon un autre mode de réalisation, chaque conduite débouche dans la zone de transition ;
- Le canal d'écoulement s'étend entre une entrée et une sortie de fluide, avantageusement la première zone est côté entrée et la deuxième zone côté sortie dans le cas d'un échangeur pour le refroidissement d'un élément électrique et/ou électronique, et pour un échangeur de chaleur intervenant dans le chauffage d'un élément électrique et/ou électronique la première zone est disposée côté sortie et la deuxième zone est disposée côté entrée.
- Le corps d'échange thermique comprend une conduite d'alimentation, alimentant une pluralité de canaux d'écoulement, et une conduite d'évacuation évacuant le fluide provenant des canaux d'écoulement, chaque canal d'écoulement étant relié à la conduite d'alimentation par leur entrée, et à la conduite d'évacuation par leur sortie.

L'invention porte aussi sur un boitier comprenant une pluralité de parois formant un logement interne et un échangeur de chaleur tel que décrit précédemment et avantageusement assemblé au sein du logement interne. Avantageusement, le boitier comprend un élément électrique et/ou électronique assemblé au contact thermique de l'échangeur de chaleur.

Il va de soi que les caractéristiques décrites en rapport avec les différents modes de réalisations peuvent être combinées tant qu'elle ne présente pas de contradiction technique ou structurelle à être combinées.

D'autres caractéristiques et avantages de l'invention apparaîtront plus clairement à la lecture de la description suivante, donnée à titre d'exemple illustratif et non limitatif, et des dessins annexés parmi lesquels :
- La figure 1 montre une représentation schématique de l'échangeur de chaleur selon un premier mode de réalisation de l'invention,
- La figure 2 montre une vue latérale d'un troisième mode de réalisation de l'invention.
- La figure 3 montre une vue en coupe de l'échangeur de la figure 1 selon un plan de coupe AA'.
- La figure 4 montre une vue en coupe de l'échangeur de la figure 1 selon un plan de coupe BB'.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la présente description, on peut indexer certains éléments ou paramètres, comme par exemple premier zone ou deuxième zone ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

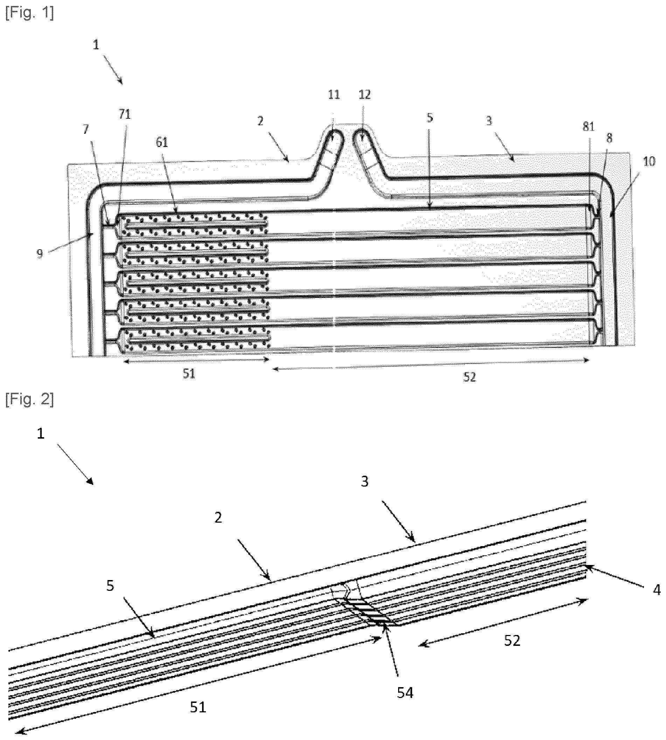

La figure 1 étant une vue de dessous, seule la paroi de base est visible, la paroi d'échange thermique étant opposée à la paroi de base elle ne sera pas représentée sur cette figure.

La figure 1 représente un premier mode de réalisation de l'invention dans lequel l'échangeur de chaleur 1 comprend un corps d'échange thermique 2 présentant :
- une paroi d'échange thermique 3 (non représentée sur cette figure) destiné à être en contact thermique avec l'élément électrique et/ou électronique
- une paroi de base 4 opposée à la paroi d'échange thermique,
- un canal d'écoulement 5 d'un fluide caloporteur formé entre la paroi d'échange thermique et la paroi de base,
le canal d'écoulement comprenant :
- une première zone 51 présentant un premier moyen de perturbation de flux de fluide caloporteur 61,
- une deuxième zone présentant et un deuxième moyen de perturbation de flux de fluide caloporteur 62,
le premier moyen de perturbation de flux 61 consistant en une pluralité de déformation locale de la surface de base et le deuxième moyen de perturbation de flux 62 consistant en une ailette agencée entre la surface d'échange thermique et la surface de base et formant une pluralité de chemin d'écoulement.

Le corps d'échange thermique 2 comprenant une pluralité de canaux d'écoulement 5, chacun s'étendant entre une entrée 7 et une sortie 8. Chaque canal d'écoulement 5 comprenant donc une entrée 7, une chambre d'alimentation 71, deux conduites 511, une chambre d'évacuation 81 et une sortie 8. Chacun de ces canaux est connecté par leur entrée 7 à une conduite d'alimentation 9 et par leur sortie à une conduite d'évacuation 10. La conduite d'alimentation comprend une ouverture d'alimentation 11 et la conduite d'évacuation comprend une ouverture d'évacuation 12, les ouvertures 11 et 12 étant destinées à être connectées à un circuit de circulation de fluide caloporteur. Chacun des modes de réalisation peut comprendre une conduite d'alimentation et une conduite d'évacuation telle que représentées la figure 1.

Le canal d'écoulement 5 présente le long de la première zone 51 deux conduites 511 parallèles et étanches entre-elles. Le corps d'échange thermique 2 comprenant un séparateur 21 permettant de séparer les conduites 511 entre-elles. Les conduites 511 débouchant dans la deuxième zone 52 du canal d'écoulement 5.

La figure 2 présente un mode de réalisation, dans lequel le diamètre hydraulique est constant le long de chaque zone 51, 52, le deuxième diamètre hydraulique étant supérieur au premier diamètre hydraulique et les première 51 et deuxième 52 zones sont séparées entre elles par une zone de transition 54. La zone de transition 54 étant une zone de diamètre hydraulique évolutif dans le sens de circulation du flux passant du premier diamètre hydraulique au second diamètre hydraulique.

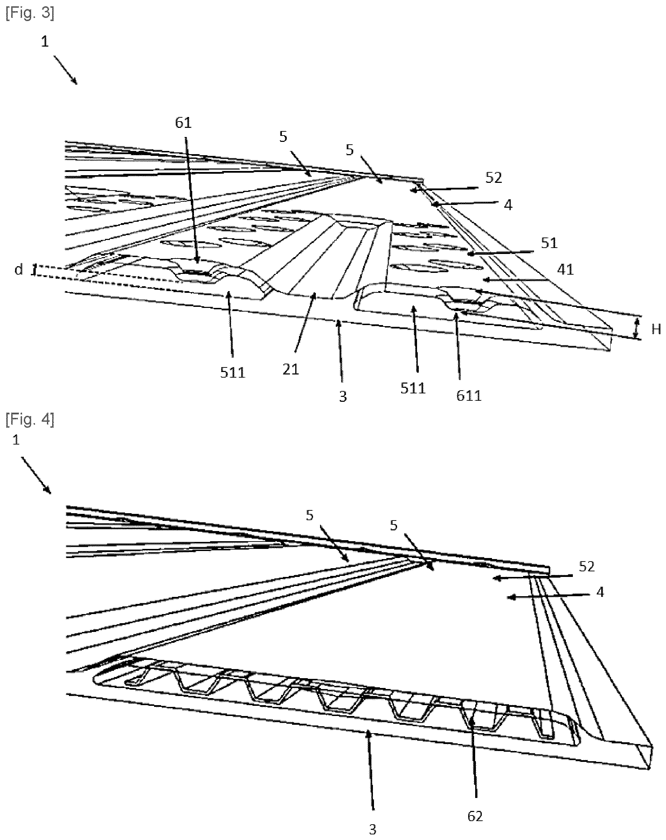

La figure 3 représente l'échangeur de la figure 1 selon un plan de coupe AA'.

La première zone 51 comprends deux conduites 511 étanche l'une de l'autre et séparées par un séparateur 21. Selon un mode de réalisation, le séparateur est une zone de contact étanche entre une plaque formant la paroi de base 4 et une plaque formant la paroi d'échange thermique 3.

Chaque déformation 61 présente une hauteur H s'étendant entre les parties non déformées 41 de la paroi de base et un sommet 611 de la déformation 61, avantageusement le sommet 611 étant éloigné d'une distance d non nulle de la paroi d'échange thermique 3 ;
La figure 4 représente une vue en coupe d'un échangeur selon le mode de réalisation de la figure 1 selon un plan de coupe BB'.

La figure 4 montre particulièrement l'intérieur du canal d'écoulement 5 au niveau de la deuxième zone 52. Le canal d'écoulement 5 comprenant une ailette 62 entre la paroi de base 4 et la paroi d'échange thermique 3. L'ailette 62 est assemblée entre une plaque formant la paroi d'échange thermique 3 et une plaque formant la paroi de base 4.

## Revendications

1. Echangeur de chaleur, comprenant un corps d'échange thermique présentant :
- une surface d'échange thermique
- une surface de base opposée à la surface d'échange thermique,
- un canal d'écoulement d'un fluide caloporteur formé entre la surface d'échange thermique et la surface de base,
le canal d'écoulement comprenant :
- une première zone présentant un premier moyen de perturbation de flux de fluide caloporteur,
- une deuxième zone présentant un deuxième moyen de perturbation de flux de fluide caloporteur,
le premier moyen de perturbation de flux consistant en une pluralité de déformation locale de la surface de base et le deuxième moyen de perturbation de flux consistant en une ailette agencée entre la surface d'échange thermique et la surface de base et formant une pluralité de chemin d'écoulement, de façon à augmenter de façon significative le coefficient d'échange thermique de la deuxième zone par rapport au coefficient d'échange thermique de la première zone du canal d'écoulement, et **caractérisé en ce que** le canal d'écoulement (5) comprend une pluralité de conduites (511) parallèles entre-elles au niveau de la première zone (51) et ce **en ce que** l'échangeur thermique est pour la gestion thermique d'un élément électrique et/ou électronique avantageusement d'un véhicule et **en ce que** la surface d'échange thermique est destiné à être en contact thermique avec l'élément électrique et/ou électronique.

2. Echangeur de chaleur selon la revendication précédente, dans lequel le deuxième moyen de perturbation de flux (62) est apte à générer une turbulence de l'écoulement du fluide caloporteur supérieure à la turbulence générée par le premier moyen de perturbation de flux (61) et/ou le deuxième diamètre hydraulique moyen est supérieur au premier diamètre hydraulique moyen.

3. Echangeur de chaleur selon la revendication précédente, dans lequel la paroi de base comprend les déformations et des parties non déformées entre chaque déformation, le ratio déformations / parties non déformée au cm² de la première zone peut être constant ou évolutif le long de la première zone.

4. Echangeur de chaleur selon l'une des revendications précédentes, dans lequel chaque déformation présente une hauteur H et un sommet éloigné d'une distance d non nulle de la paroi d'échange thermique.

5. Echangeur de chaleur selon l'une des revendications précédentes, dans lequel la paroi d'échange thermique (3) est une première plaque et la paroi de base (4) est une deuxième plaque, le canal d'écoulement (5) étant formé par au moins une déformation de la deuxième plaque.

6. Echangeur de chaleur selon l'une des revendications précédentes, dans laquelle le diamètre hydraulique augmente de façon régulière le long de la première zone du canal et/ou ou de la deuxième zone (52).

7. Echangeur de chaleur selon l'une des revendications 1 à 5 dans lequel, le diamètre hydraulique est constant le long de chaque zone (51, 52), et les première (51) et deuxième zones (52) sont séparées entre elles par une zone de transition (53)

8. Echangeur de chaleur selon l'une des revendications précédentes, dans lequel la première zone s'étend entre 50 et 80% de la longueur totale du canal, avantageusement 70%.

9. Boitier comprenant une pluralité de parois formant un logement interne et un échangeur de chaleur selon l'une des revendications précédentes, avantageusement l'échangeur de chaleur étant positionné au sein du logement interne.

## Patentansprüche

1. Wärmetauscher, umfassend einen Wärmeaustauschkörper mit:
- einer Wärmeaustauschfläche
- einer Grundfläche gegenüber der Wärmeaustauschfläche,
- einem Strömungskanal für ein Wärmeträgerfluid, der zwischen der Wärmeaustauschfläche und der Grundfläche gebildet ist,
wobei der Strömungskanal umfasst:
- einen ersten Bereich mit einem ersten Mittel zur Störung des Wärmeträgerfluidstroms,
- einen zweiten Bereich mit einem zweiten Mittel zur Störung des Wärmeträgerfluidstroms,
wobei das erste Strömungsstörungsmittel aus einer Vielzahl von lokalen Verformungen der Grundfläche besteht und das zweite Strömungsstörungsmittel aus einer Rippe besteht, die zwischen der Wärmeaustauschfläche und der Grundfläche angeordnet ist und eine Vielzahl von Strömungswegen bildet, um den Wärmeübertragungskoeffizienten des zweiten Bereichs im Vergleich zum Wärmeübertragungskoeffizienten des ersten Bereichs des Strömungskanals signifikant zu erhöhen, und **dadurch gekennzeichnet, dass** der Strömungskanal (5) eine Vielzahl von zueinander parallelen Leitungen (511) im ersten Bereich (51) umfasst und dass der Wärmetauscher für das thermische Management eines elektrischen und/oder elektronischen Elements, vorteilhafterweise eines Fahrzeugs, bestimmt ist und dass die Wärmeaustauschfläche dazu bestimmt ist, in thermischem Kontakt mit dem elektrischen und/oder elektronischen Element zu stehen.

2. Wärmetauscher nach dem vorhergehenden Anspruch, bei dem das zweite Strömungsstörungsmittel (62) geeignet ist, eine Turbulenz der Strömung des Wärmeträgerfluids zu erzeugen, die höher ist als die durch das erste Strömungsstörungsmittel (61) erzeugte Turbulenz und/oder der zweite mittlere hydraulische Durchmesser größer ist als der erste mittlere hydraulische Durchmesser.

3. Wärmetauscher nach dem vorhergehenden Anspruch, bei dem die Grundwand die Verformungen und nicht verformte Teile zwischen jeder Verformung umfasst, wobei das Verhältnis von Verformungen zu nicht verformten Teilen pro cm² des ersten Bereichs entlang des ersten Bereichs konstant oder veränderlich sein kann.

4. Wärmetauscher nach einem der vorhergehenden Ansprüche, bei dem jede Verformung eine Höhe H und einen Scheitel aufweist, der in einem nicht-nullwertigen Abstand d von der Wärmeaustauschwand entfernt ist.

5. Wärmetauscher nach einem der vorhergehenden Ansprüche, bei dem die Wärmeaustauschwand (3) eine erste Platte und die Grundwand (4) eine zweite Platte ist, wobei der Strömungskanal (5) durch mindestens eine Verformung der zweiten Platte gebildet wird.

6. Wärmetauscher nach einem der vorhergehenden Ansprüche, bei dem der hydraulische Durchmesser entlang des ersten Bereichs des Kanals und/oder des zweiten Bereichs (52) regelmäßig zunimmt.

7. Wärmetauscher nach einem der Ansprüche 1 bis 5, bei dem der hydraulische Durchmesser entlang jedes Bereichs (51, 52) konstant ist und der erste (51) und zweite Bereich (52) durch einen Übergangsbereich (53) voneinander getrennt sind.

8. Wärmetauscher nach einem der vorhergehenden Ansprüche, bei dem sich der erste Bereich über 50 bis 80% der Gesamtlänge des Kanals erstreckt, vorteilhafterweise 70%.

9. Gehäuse, umfassend eine Vielzahl von Wänden, die einen internen Hohlraum bilden, und einen Wärmetauscher nach einem der vorhergehenden Ansprüche, wobei der Wärmetauscher vorteilhafterweise innerhalb des internen Hohlraums positioniert ist.

## Claims

1. Heat exchanger, comprising a heat exchange body having:
- a heat exchange surface
- a base surface opposite to the heat exchange surface,
- a flow channel of a heat transfer fluid formed between the heat exchange surface and the base surface,
the flow channel comprising:
- a first zone having a first means for disturbing the heat transfer fluid flow,
- a second zone having a second means for disturbing the heat transfer fluid flow,
the first flow disturbance means consisting of a plurality of local deformations of the base surface and the second flow disturbance means consisting of a fin arranged between the heat exchange surface and the base surface and forming a plurality of flow paths, so as to significantly increase the heat transfer coefficient of the second zone compared to the heat transfer coefficient of the first zone of the flow channel, and **characterized in that** the flow channel (5) comprises a plurality of conduits (511) parallel to each other at the first zone (51) and **in that** the heat exchanger is for thermal management of an electrical and/or electronic element advantageously of a vehicle and **in that** the heat exchange surface is intended to be in thermal contact with the electrical and/or electronic element.

2. Heat exchanger according to the preceding claim, wherein the second flow disturbance means (62) is capable of generating a turbulence of the heat transfer fluid flow higher than the turbulence generated by the first flow disturbance means (61) and/or the second average hydraulic diameter is greater than the first average hydraulic diameter.

3. Heat exchanger according to the preceding claim, wherein the base wall comprises the deformations and non-deformed parts between each deformation, the ratio of deformations / non-deformed parts per cm² of the first zone can be constant or evolving along the first zone.

4. Heat exchanger according to one of the preceding claims, wherein each deformation has a height H and a summit distant by a non-zero distance d from the heat exchange wall.

5. Heat exchanger according to one of the preceding claims, wherein the heat exchange wall (3) is a first plate and the base wall (4) is a second plate, the flow channel (5) being formed by at least one deformation of the second plate.

6. Heat exchanger according to one of the preceding claims, wherein the hydraulic diameter increases regularly along the first zone of the channel and/or or the second zone (52).

7. Heat exchanger according to one of claims 1 to 5 wherein the hydraulic diameter is constant along each zone (51, 52), and the first (51) and second zones (52) are separated from each other by a transition zone (53)

8. Heat exchanger according to one of the preceding claims, wherein the first zone extends between 50 and 80% of the total length of the channel, advantageously 70%.

9. Housing comprising a plurality of walls forming an internal compartment and a heat exchanger according to one of the preceding claims, advantageously the heat exchanger being positioned within the internal compartment.
